(19) Europäisches Patentamt

European Patent Office

Office européen des brevets

(11) Veröffentlichungsnummer: **0 106 168 B1**

(12) **EUROPÄISCHE PATENTSCHRIFT**

(45) Veröffentlichungstag der Patentschrift: **12.02.92**

(21) Anmeldenummer: **83109124.4**

(22) Anmeldetag: **15.09.83**

(51) Int. Cl.⁵: **C08J 3/12**, C09D 129/04, C09J 129/04

(54) **Polymer-Granulat, Verfahren zu seiner Herstellung und seine Verwendung.**

(30) Priorität: **23.09.82 DE 3235189**

(43) Veröffentlichungstag der Anmeldung:
**25.04.84 Patentblatt 84/17**

(45) Bekanntmachung des Hinweises auf die
Patenterteilung:
**12.02.92 Patentblatt 92/07**

(84) Benannte Vertragsstaaten:
**AT BE CH DE FR GB IT LI NL SE**

(56) Entgegenhaltungen:
**DE-A- 2 910 374**
**DE-B- 1 228 058**
**GB-A- 1 376 091**
**US-A- 3 876 573**

(73) Patentinhaber: **HOECHST AKTIENGESELL-SCHAFT**
**Postfach 80 03 20**
**W-6230 Frankfurt am Main 80(DE)**

(72) Erfinder: **Zimmermann, Wolfgang, Dr.**
**Im Stückes 48**
**W-6233 Kelkheim (Taunus)(DE)**
Erfinder: **Harréus, Albrecht, Dr.**
**Philipp-Kremer-Strasse 16**
**W-6233 Kelkheim (Taunus)(DE)**

## Beschreibung

Die Erfindung bezieht sich auf ein Polymer-Granulat, dessen Partikel aus einer Kernkomponente und einer Überzugskomponente bestehen, auf ein Verfahren zu seiner Herstellung durch Vermischen eines körnigen Polymers mit einer pulverförmigen Substanz und auf seine Verwendung zur Herstellung von Klebstoffen.

Wasserlösliche Polymere, z.B. Polyvinylalkohol, kommen häufig in Kombination mit anderen Substanzen, z.B. Füllstoffen, Viskositätsreglern und Emulgatoren, zur Anwendung. Üblicherweise werden diese Substanzen in eine wäßrige Lösung des Polymers eingerührt, was zu technischen Schwierigkeiten wie Pigmentschock oder Unverträglichkeitserscheinungen führen kann. Auch die Lagerhaltung vieler Einzelstoffe beim Verbraucher ist nachteilig. Daher wurde bereits versucht, dem Verbraucher Pulvergemische oder Granulatgemische zur Verfügung zu stellen, die bereits alle jeweils erforderlichen Stoffe enthalten. Derartige handelsübliche Gemische, z.B. aus Polyvinylalkohol und Borsäure oder Stärke, neigen allerdings aufgrund der unterschiedlichen Teilchengröße und Dichte der Komponenten zur Entmischung und sind daher nur bedingt lagerstabil und transportstabil.

Es ist bekannt, daß stufenförmig aufgebaute Kautschukteilchen im wesentlichen aus einem Kern, einer äußeren Hülle und einer Zwischenschicht bestehen, wobei der Kern von einem vernetzten elastomeren Acrylpolymer, die äußere Hülle von einem copolymer aus Methylmethacrylat und einem hydroxyfunktionellen Acrylat und die Zwischenschicht von einem Copolymer gebildet wird, das sich aus den Monomeren der Kern- und der Hüllenkomponente zusammensetzt (vgl. DE-B-2 163 461 = US-A-3 787 522). Der Aufbau der Kautschukteilchen erfolgt durch stufenweise Polymerisation der geeigneten Monomeren. Die Kautschukteilchen weisen vorzugsweise einen mittleren Durchmesser von 0,04 bis 1 $\mu$m auf; sie dienen als Ausgangsmaterial zur Herstellung von hitzehärtenden Formpulvern.

Ferner ist ein weichmacherhaltiges Polyvinylalkohol-Granulat bekannt, das den Weichmacher in gleichmäßiger Verteilung enthält und überwiegend aus Partikeln mit Durchmessern im Bereich von 0,4 bis 4 mm besteht (vgl. EP-A-4587 = US-A-4 323 492). Dabei erfolgt das Einmischen des Weichmachers in Gegenwart einer geringen Menge Wasser, ohne daß der Polyvinylalkohol dadurch gelöst wird, und während des Mischvorgangs wird die Temperatur derart erhöht und wieder gesenkt, daß die Partikel des Polyvinylalkohols quellen und vorübergehend agglomerieren. Dieses Granulat eignet sich zur Herstellung von Formkörpern aller Art, insbesondere Folien.

Aus der DE-A-2 910 374 sind kleinteilige, staubarme, nicht klumpende und fließfähige Klebstoffe von nicht festgelegter Teilchengröße bekannt, die mit flüssigen oder pastösen Zusätzen unter Bedeckung ihrer Oberfläche mit diesen flüssigen oder pastösen Substanzen behandelt worden sind, so daß die Klebstoffe beim Verpacken nicht stauben, beim Transport sich nicht entmischen und beim Einrühren in Wasser nicht klumpen sollen. Es ist insbesondere ein fließfähiges Gemisch, bestehende aus (a) mindestens einem kleinteiligen hydrophilen organischen Polymeren und (b) 0,01 bis 10 Gew.-%, bezogen auf (a), einer flüssigen oder pastösen schwerflüchtigen organischen Komponente, die sich im wesentlichen auf der Oberfläche von (a) befindet, beschrieben, wobei (a) u. a. auch Polyvinylalkohol sein kann. Infolge des Gehaltes an den pastösen Zusätzen ist die Verwendbarkeit der Klebstoffe begrenzt und häufig unbefriedigend.

Aus der GB-A-1 376 091 ist ein quellbares, hydrophiles Polymerisat bekannt, das aus einem wasserlöslichen Polymerisat durch Strahlungsvernetzung und Umwandlung in ein wasserunlösliches und in Wasser nur noch quellbares Polymergranulat erhalten werden kann. Es dient zur Herstellung z. B. von Bodenverbesserungsmitteln, landwirtschaftlichen Schädlingsbekämpfungsmitteln, Düngemitteln oder wasserabsorbierenden Mitteln in Windeln oder Tampons. Durch die obligatorische Vernetzung des Polymerisats und dessen daraus resultierende Wasserunlöslichkeit ist es z. B. als Klebstoff oder als Klebstoffkomponente nicht brauchbar. Es enthält außerdem zwingend mindestens einen inerten pulverförmigen Füllstoff, wie z. B. Holzmehl.

Aufgabe der Erfindung ist die Bereitstellung eines Polymer-Granulats auf der Grundlage eines wasserlöslichen Polymers; das Granulat soll gut rieselfähig sein und eine möglichst einheitliche Partikelgröße aufweisen.

Die Erfindung betrifft ein Polymer-Granulat gemäß Anspruch 1.

Ferner betrifft die Erfindung ein Verfahren gemäß Anspruch 2.

Die Erfindung betrifft auch die Verwendung des vorgenannten Polymer-Granulats als Ausgangsmaterial zur Herstellung von Klebstoffen.

Die Kernkomponente ist ein körniger, wasserlöslicher Polyvinylalkohol mit Partikeldurchmesern von 0,4 bis 5 mm, vorzugsweise 0,5 bis 3,5 mm. Der Polyvinylalkohol wird in bekannter Weise hergestellt durch Verseifung, vorzugsweise durch Alkoholyse, von Polyvinylestern, vorzugsweise Polyvinylacetat (vgl. z.B. DE-C-1 720 709 = GB-A-1 168 757). Die 4gewichtsprozentige wäßrige Lösung des Polyvinylalkohols weist eine Viskosität von 3 bis 70, vorzugsweise 10 bis 60 mPa.s auf (gemessen bei einer Temperatur von 20 $^\circ$ C). Die

Esterzahl des Polyvinylalkohols liegt im Bereich von 10 bis 250, vorzugsweise 20 bis 200 mg KOH/g.

Die Überzugskomponente ist eine pulverförmige Substanz mit Partikeldurchmessern von 0,01 bis 1 mm; sie ist in jedem Fall feinkörniger als die Kernkomponente. Dieses Pulver ist eine wasserlösliche Verbindung oder eine wasserunlösliche Verbindung. Geeignet ist z.B. Borsäure.

Die Kernkomponente unterscheidet sich von der Überzugskomponente auch hinsichtlich der Verteilung der Partikelgröße, gemessen nach DIN 4190 (Rosin-Rammler-Sperling-Diagramm). Die Kernkomponente hat vorzugsweise eine Verteilung von D 10 % bei maximal 0,9 mm und D 90 % bei maximal 5 mm. Die Überzugskomponente hat vorzugsweise eine Verteilung von D 10 % bei höchstens 0,02 mm und D 90 % bei höchstens 0,9 mm. Die Kernkomponente und die Überzugskomponente werden im Gewichtsverhältnis von 50:50 bis 98:2, vorzugsweise 70:30 bis 95:5, eingesetzt.

Die Stoffe, die die Kernkomponente und die Überzugskomponente bilden, werden bei einer Temperatur von 15 bis 30˚C miteinander vermischt; eine zusätzliche Wärmezufuhr ist nicht erforderlich. Das Vermischen erfolgt in Gegenwart von Wasser, das in einer Menge von 5 bis 20, vorzugsweise 5 bis 15 Gewichtsprozent (bezogen auf die Kernkomponente) eingesetzt wird. Gegebenenfalls wird das Wasser in Form eines Nebels in das Mischgerät, das bereits mindestens die Kernkomponente enthält, gesprüht. Das Vermischen wird in einem handelsüblichen Mischgerät durchgeführt, wobei eine kontinuierliche Verfahrensweise bevorzugt ist. Geeignete Geräte sind z.B. Taumelmischer, Planetenrührwerke, Zwangsmischer und Pelletiermaschinen sowie Drehrohrtrockner und Röhrenbündeltrockner.

Für das erfindungsgemäße Verfahren sind zwei Ausführungsformen möglich: Entweder wird zunächst die Kernkomponente mit der Überzugskomponente vermischt und dann wird das Wasser hinzugefügt, oder zunächst wird die Kernkomponente mit dem Wasser befeuchtet und dann wird die Überzugskomponente hinzugefügt. Die erstgenannte Variante ist zweckmäßig, wenn die Überzugskomponente eine in Wasser unlösliche oder schwer lösliche Verbindung ist. Die letztgenannte Variante ist angebracht, wenn die Überzugskomponente eine wasserlösliche Verbindung ist; auf diese Weise lassen sich auch mehrere Schichten der Überzugskomponente auf die Kernkomponente aufbringen, so daß die Überzugskomponente der Polymer-Partikel mehrschichtig aufgebaut ist.

Für den Mischvorgang wird eine Zeitspanne von höchstens 30 Minuten benötigt, wenn ein Mischgerät mit wenig intensiver Durchmischung des Mischguts eingesetzt wird. Bei Mischgeräten mit hoher Mischintensität (Rührgeschwindigkeit) ist die Durchmischung bereits nach höchstens 10 Minuten beendet. Das Ende des Mischvorgangs ist daran zu erkennen, daß die Überzugskomponente im Mischgefäß nicht mehr staubt. Das nach dem Mischen erhaltene Granulat wird gegebenenfalls noch getrocknet, und zwar bei einer Temperatur von 100 bis 120˚C, vorzugsweise 105 bis 115˚C. Die Trocknung kann auch unter einer Inertgasatmosphäre erfolgen, vorzugsweise unter Stickstoff. Die Trocknungszeit beträgt zweckmäßigerweise 30 bis 90, vorzugsweise 50 bis 70 Minuten.

Eine besondere Ausführungsform des erfindungsgemäßen Verfahrens darin, daß der Polyvinylalkohol in Form eines körnigen Gels eingesetzt wird, das mindestens 85 Gewichtsprozent Polyvinylalkohol enthält. Dieses Gel enthält als Dispergiermittel (Flüssigphase) vorzugsweise ein niederes Alkanol wie Methanol oder Ethanol.

Das erfindungsgemäße Polymer-Granulat weist einen Gehalt an bei 100 bis 120˚C flüchtigen Bestandteilen, die im wesentlichen aus Wasser bestehen, von höchstens 30, vorzugsweise 3 bis 15 Gewichtsprozent auf. Der Feststoff-Gehalt des Polymer-Granulats ist dementsprechend mindestens 70, vorzugsweise 85 bis 97 Gewichtsprozent. Es ist einwandfrei rieselfähig und lager- und transportstabil. Während des Lagerns tritt kein Verblocken ein, und während des Transportes ist ein Abrieb nicht feststellbar. Es eignet sich insbesondere als Ausgangsmaterial zur Herstellung von Klebstoffen und Beschichtungen.

Die folgenden Beispiele dienen zur näheren Erläuterung der Erfindung. Prozentangaben beziehen sich jeweils auf das Gewicht.

Beispiel 1

6 kg eines Polyvinylalkohols, dessen 4prozentige wäßrige Lösung bei einer Temperatur von 20˚C eine Viskosität von 20 mPa.s aufwies und der eine Esterzahl von 20 mg KOH/g hatte, wurden in einen handelsüblichen 35-Liter-Zwangsmischer eingefüllt, und 300 g Borsäure wurden hinzugefügt. Der Polyvinylalkohol hatte folgende Korngrößenverteilung: D 10 % = 0,9 mm, D 50 % = 1,4 mm, D 90 % = 2,6 mm; die Korngrößenverteilung der Borsäure war folgendermaßen: D 10 % = 0,025 mm, D 50 % = 0,09 mm, D 90 % = 0,14 mm. Anschließend wurden 480 g Wasser innerhalb von 30 s zugefügt, und die Komponenten wurden 3 min lang bei einer Temperatur von 20˚C und einer Rührerumdrehungsgeschwindigkeit von 1200 min⁻¹ miteinander vermischt. Es wurde ein gut rieselfähiges, nichtblockendes, staubfreies Polymer-Granulat erhalten, dessen Partikel Durchmesser im Bereich von 1,0 bis 2,8 mm aufwiesen. Durch einstündiges Trocknen bei 110˚C verliert das Granulat einen Gehalt an flüchtigen Bestandteilen von 12,2 Gew.-%, bezogen auf das Granulat.

Beispiel 2

1 kg eines körnigen, methanolischen Gels, das 50 % eines Polyvinylalkohols mit den in Beispiel 1 genannten Kenndaten enthielt, wurde in einem Rotationsverdampfer (Kolbeninhalt 2 1) unter einer Stickstoffatmosphäre bei einer Temperatur von 105°C auf einen Feststoffgehalt von 90 % eingeengt. Dann wurden 50 g der in Beispiel 1 verwendeten Borsäure und sofort anschließend 50 g Wasser hinzugefügt, und alle Komponenten wurden 5 min lang unter Einhaltung der Temperatur von 105°C miteinander vermischt. Es resultierte ein gut rieselfähiges, nichtblockendes, staubfreies Polymer-Granulat, dessen Partikel Durchmesser im Bereich von 1,0 bis 2,8 mm aufwiesen.

Anwendungsbeispiel 1

In einem indirekt beheizten Glaskolben wurden 150 g des nach Beispiel 1 erhaltenen Polymer-Granulats in 850 g Wasser bei einer Temperatur von 90°C zu einer 15prozentigen Lösung gelöst. Diese Lösung wurde mit einer 7prozentigen, wäßrigen Lösung von Dinatriumhydrogenphosphat auf einen pH-Wert von 6,8 eingestellt. Das so erhaltene Klebemittel wies eine Viskosität von 32 Pa.s auf, gemessen im Epprecht-Viskosimeter mit Spindel D/III bei 20°C; es zeigte kein Fadenziehen und ließ sich auf einer handelsüblichen Etikettiermaschine ohne Schwierigkeiten zum Aufkleben von Papieretiketten auf Glasflaschen einsetzen.

**Patentansprüche**

1. Nichtstaubendes und sich nicht entmischendes, rieselfähiges Polymer-Granulat, dessen Partikel aus einer Kernkomponente und einer Überzugskomponente bestehen, dadurch gekennzeichnet, daß die Kernkomponente aus wasserlöslichem Polyvinylalkohol besteht, die Überzugskomponente eine von der Kernkomponente verschiedene und mit dem Polyvinylalkohol zur Komplexbildung befähigte Verbindung ist, die Granulatpartikel Durchmesser von 0,6 bis 6 mm aufweisen und gegebenenfalls bis zu 20 Gew.-% Wasser, bezogen auf die Kernkomponente, enthalten.

2. Verfahren zur Herstellung eines Polymer-Granulats nach Anspruch 1, dessen Partikel aus einer Kernkomponente und einer Überzugskomponente bestehen, durch Vermischen eines die Kernkomponente bildenden körnigen Polymers mit einer die Überzugskomponente bildenden pulverförmigen Substanz, dadurch gekennzeichnet, daß man als Kernkomponente körnigen, wasserlöslichen Polyvinylalkohol mit Partikeldurchmessern von 0,4 bis 5 mm in Gegenwart von 5 bis 15 Gew.-% Wasser, bezogen auf die Menge des wasserlöslichen Polyvinylalkohols, mit der pulverförmigen Überzugskomponente, deren Partikeldurchmesser im Bereich von 0,01 bis 1 mm liegen und die mit der Kernkomponente zur Komplexbildung befähigt ist, intensiv vermischt.

3. Verfahren nach Anspruch 2, dadurch gekennzeichnet, daß man als Kernkomponente körnigen, wasserlöslichen Polyvinylalkohol in Form eines Gels, das mindestens 85 Gew.-% Polyvinylalkohol enthält, verwendet.

4. Verfahren nach Anspruch 3, dadurch gekennzeichnet, daß es kontinuierlich durchgeführt wird.

5. Verwendung des Polymer-Granulats nach Anspruch 1, oder hergestellt nach einem oder mehreren der Ansprüche 2 bis 4, als Ausgangsmaterial zur Herstellung von Klebstoffen oder Beschichtungen.

**Claims**

1. Free-flowing polymer granulate which does not form dust and does not segregate and whose particles comprise

a core component and a coating component, wherein the core component consists of a water-soluble polyvinyl alcohol, the coating component is a compound which differs from the core component and is capable of forming a complex with the polyvinyl alcohol, the granulate particles have diameters from 0.6 to 6 mm and optionally contain up to 20 % by weight of water, based on the core component.

2. A process for preparing a polymer granulate as claimed in claim 1, whose particles comprise a core component and a coating component, the process comprising mixing a granular polymer forming the core component with a pulverulent substance forming the coating component, wherein the core component consisting of a granular, water-soluble polyvinyl alcohol having particle diameters from 0.4 to 5 mm is intimately mixed, in the presence of 5 to 15 % by weight of water, based on the amount of water-soluble polyvinyl alcohol, with the pulverulent coating component, whose particle diameters are in the range from 0.01 to 1 mm and which is capable of forming a complex with the core component.

3. The process as claimed in claim 2, wherein the core component used is a granular, water-soluble polyvinyl alcohol in the form of a gel which contains at least 85 % by weight of polyvinyl alcohol.

4. The process as claimed in claim 3, which is carried out on a continuous basis.

5. Use of the polymer granulate as claimed in claim 1 or prepared as claimed in any one or several of claims 2 to 4, as a starting material for the preparation of adhesives or coatings.

**Revendications**

1. Granulé de polymère ne dégageant pas de poussière, ne donnant pas lieu à une démixion, fluent, dont les particules se composent d'un constituant de noyau et d'un constituant de revêtement, caractérisé en ce que le constituant de noyau est constitué d'un alcool polyvinylique soluble dans l'eau, le constituant de revêtement est un composé différent du constituant de noyau et est capable de former un complexe avec l'alcool polyvinylique, les particules de granulé présentent des diamètres de 0,6 à 6 mm et contiennent le cas échéant jusqu'à 20% en poids d'eau par rapport au constituant de noyau.

2. Procédé de préparation d'un granulé de polymère selon la revendication 1, dont les particules se composent d'un constituant de noyau et d'un constituant de revêtement, par mélange d'un polymère en grains formant le constituant de noyau avec une substance pulvérulente formant le constituant de revêtement, caractérisé en ce qu'on mélange intimément comme constituant de noyau un alcool polyvinylique en grains, soluble dans l'eau, ayant un diamètre de particules de 0,4 à 5 mm en présence de 5 à 15% en poids d'eau par rapport à la quantité de l'alcool polyvinylique soluble dans l'eau, avec le constituant de revêtement pulvérulent, dont le diamètre de particules est dans le domaine de 0,01 à 1 mm, et qui est capable de former un complexe avec le constituant de noyau.

3. Procédé selon la revendication 2, caractérisé en ce qu on utilise comme constituant de noyau un alcool polyvinylique en grains, soluble dans l'eau, sous la forme d'un gel, qui contient au moins 85% en poids d'alcool polyvinylique.

4. Procédé selon la revendication 3, caractérisé en ce qu'il est effectué en continu.

5. Utilisation du granulé de polymère selon la revendication 1, ou préparé selon une ou plusieurs des revendications 2 à 4, comme matière de départ pour la préparation de colles ou d'enductions.